(19) Europäisches Patentamt
European Patent Office
Office européen des brevets

(11) **EP 0 675 823 B1**

(12) **EUROPÄISCHE PATENTSCHRIFT**

(45) Veröffentlichungstag und Bekanntmachung des Hinweises auf die Patenterteilung:
**20.01.1999 Patentblatt 1999/03**

(21) Anmeldenummer: 93923499.3

(22) Anmeldetag: **20.10.1993**

(51) Int. Cl.⁶: **B64G 1/14**, B64G 1/40, B64C 39/00

(86) Internationale Anmeldenummer:
**PCT/EP93/02888**

(87) Internationale Veröffentlichungsnummer:
**WO 95/11161 (27.04.1995 Gazette 1995/18)**

(54) **WIEDERVERWENDBARES RAUMFLUGGERÄT**

REUSABLE SPACECRAFT

VEHICULE SPATIAL REUTILISABLE

(84) Benannte Vertragsstaaten:
**FR GB IT NL SE**

(43) Veröffentlichungstag der Anmeldung:
**11.10.1995 Patentblatt 1995/41**

(73) Patentinhaber: **Kunkel, Klaus**
**D-40477 Düsseldorf (DE)**

(72) Erfinder:
• **PLICHTA, Peter**
**D-40225 Düsseldorf (DE)**
• **BÜTTNER, Walter**
**D-40591 Düsseldorf (DE)**

(74) Vertreter:
**Döring, Wolfgang, Dr.-Ing.**
**Patentanwälte**
**Hauck, Graalfs, Wehnert, Döring, Siemons et al**
**Mörickestrasse 18**
**40474 Düsseldorf (DE)**

(56) Entgegenhaltungen:
WO-A-93/14973          DE-A- 1 456 032
DE-A- 2 231 008        FR-A- 1 018 071
FR-A- 1 129 038

## Beschreibung

Die vorliegende Erfindung betrifft ein wiederverwendbares Raumfluggerät gemäß dem Oberbegriff des Anspruchs 1.

Die mathematische Konstante $e$ = 2,718... regelt bekanntlich physikalische Abläufe. Alle Versuche, die Erde zu verlassen, werden durch die Raketengleichung

$$m = m_0 \cdot e^{-v/w}$$

festgelegt, wobei $m_0$ das Gewicht der vollgetankten Rakete, $m$ die nach dem Verbrennen des Treibstoffes übrigbleibende Nutzlast, $v$ die erreichte Endgeschwindigkeit der Rakete und $w$ die Ausströmgeschwindigkeit der Raketengase bedeuten. Unter Berücksichtigung dieser Gleichung ergibt sich, daß es mit den derzeit verfügbaren chemischen Treibstoffen nicht möglich ist, die Erde zu verlassen, ohne daß dabei auf ein Mehrstufenprinzip zurückgegriffen werden muß.

Mehrstufenraketen mit Flüssigkeitsantrieb besitzen bekanntlich die Form großer aufeinandergestellter langer Zylinder, welche vor dem Starten derart voll getankt werden, daß sie nur sehr mühsam von der Startrampe abheben. Fällt auch nur eines der gebündelten Triebwerke beim Abheben aus, fällt die Rakete auf die Erde zurück und explodiert. Erschwerend kommt noch hinzu, daß insbesondere die Triebwerke der ersten Stufe lenkbar sein müssen, weil eine Mehrstufenrakete beim Abheben von der Startrampe nur mit Hilfe des Raketenschubes stabilisierbar ist. Aus diesem Grund erreichte beispielsweise die erste Stufe der zur Mondlandung verwendeten Rakete "Saturn 5" ein Startgewicht von gigantischem Ausmaß. Die ganze Rakete wird dabei von der Feuerkraft der Raketentriebwerke getragen und nimmt an Geschwindigkeit nur zu, weil durch den sehr hohen Treibstoffverbrauch das Startgewicht rapide abnimmt. All nachteilig erweist sich schließlich noch der Umstand, daß nach dem Ausbrennen der einzelnen Stufen dieselben entweder beim Zurückfallen zur Erde verglühen oder aus dem Weltraum nicht mehr zurückgeholt werden können.

Die sehr hohen Kosten einer derartigen Weltraumtechnik haben die Ingenieure veranlaßt, nach anderen Möglichkeiten Ausschau zu halten. Das amerikanische "Space Shuttle" stellt dabei ein Raketenflugzeug dar, welches an einem großen Treibstofftank aufgehängt ist. Um überhaupt eine terrestrische Umlaufbahn von etwa 250 km Höhe zu erreichen, bedarf es zusätzlich zweier gewaltiger Feststoffraketen. Im Gegensatz zu dem Treibstofftank, welcher beim Herunterfallen verglüht, werden die äußeren Hüllen dieser Feststoffraketen wieder aufgefangen und erneut verwendet. Dies ist technisch jedoch ziemlich bedenklich, weil die wiederverwendbaren Raketenhülsen den störanfälligsten Teil dieses Raketensystems darstellen. Das Raketenflugzeug selbst kann hingegen ohne Verbrauch von Treibstoff auf dafür vorbereiteten Pisten landen. Es hat sich jedoch gezeigt, daß die erwartete Kostenreduzierung durch die Wiederverwendung des Raketenflugzeugs bisher nicht eingetreten ist.

Einen vielversprechenden technischen Fortschritt könnte die von Sänger u. a. vorgeschlagene Vorgehensweise bedeuten, indem ein Raketerflugzeug auf dem Rücken eines Überschallflugzeugs befestigt wird. Das mit Strahlturbinen versehene Überschallflugzeug nutzt dabei den Sauerstoff der terrestrischen Atmosphäre aus, so daß für die erste Antriebsstufe kein flüssiges Oxidationsmittel mitgeführt werden muß. Falls es mit einem derartigen Überschallflugzeug möglich sein sollte, daß damit Geschwindigkeiten von mehr als 5000 km/h erreicht werden, ließe sich dadurch das Prinzip einer wiederverwendbaren ersten Antriebsstufe erreichen. Dagegen muß allerdings eingewendet werden, daß im Gegensatz zu dem Mutterschiff das im Huckepackverfahren getragene Raketenflugzeug aerodynamisch plump gebaut werden muß, weil bei der Rückkehr zur Erde eine Landung wie beim Space Shuttle stattfindet. Aus diesem Grund erscheint es schwierig, daß mit einem derartigen Raketenflugzeug innerhalb der Erdatmosphäre die erforderlich hohen Geschwindigkeiten der ersten Antriebsstufe erreicht werden können.

Alle drei geschilderten Verfahren stellen technisch nur Möglichkeiten dar, um Nutzlasten in den Weltraum zu befördern. Ein Landen und Starten auf gasumhüllten Planeten oder Monden ist jedoch nicht durchführbar. Allenfalls möglich wäre ein im Weltraum vorgenommener Zusammenbau einer zu Landungszwecken verwendeten Rakete, welche ähnlich wie bei der bemannten Mondfähre unter dem Einfluß eines bremsenden Flammenstrahls den festen Boden erreicht. Um jedoch wieder starten zu können, müßten ein oder mehrere unbemannte weitere Landefähren eingesetzt werden, welche der Treibstoffversorgung dienen und welche jedoch auf den fremden Himmelskörpern zurückbleiben müssen.

An Hand der GB 21 76 451 A ist bereits ein wiederverwendbares Raumfluggerät bekannt, dessen Außenmantel derart konfiguriert ist, daß bei schrägem Flug durch eine Gasatmosphäre ein Auftrieb erzeugt wird. Dieses Raumfluggerät weist dabei eine im wesentlichen langgestreckte elliptische Form auf, wodurch erreicht werden soll, daß beim Starten und Landen des Raumfluggerätes dasselbe in seine Querkonfiguration gebracht wird, während beim normalen Steigflug in der Atmosphäre eine Schwenkung um 90 Grad erfolgt, so daß die Längsachse des Flugkörpers in Richtung der Flugbahn ausgerichtet ist. Obwohl der Flugkörper geschickterweise die Lufthülle zum Auftrieb benutzt, bleibt er als Raketenflugzeug im Bereich des linearen Denkens, denn auch hier verhindert die logarithmische Raketengleichung zur Basis $e$, daß der Flugkörper ohne Inanspruchnahme von Wegwerfelementen auf eine stationäre Umlaufbahn gebracht werden kann.

Unter Berücksichtigung dieses Standes der Technik ist es Aufgabe der vorliegenden Erfindung, ein wiederverwendbares Raumfluggerät zu schaffen, mit welchem unter Vermeidung von Wegwerfelementen und unter Verzicht auf das Vorsehen besonderer Start- und Landebahnen Weltraumreisen innerhalb unseres Sonnensystems durchführbar sind.

Erfindungsgemäß wird dies durch Vorsehen der im kennzeichnenden Teil des Anspruchs 1 aufgeführten Merkmale erreicht.

Vorteilhafte Weiterbildungen der Erfindung ergeben sich an Hand der Unteransprüche.

Da die Naturkonstante $e$ mit der Kreiszahl $\pi$ über die Euler Beziehung

$$e^{2 \cdot \pi \cdot i} = 1$$

verknüpft ist, liegt die Vermutung nahe, daß die Raketengleichung nur dann wirksam umgangen werden kann, wenn ein Raumfluggerät zyklisch gebaut ist.

Aufgrund einer derartigen Ausgestaltung ist der erfindungsgemäße Raumflugkörper in der Lage, daß derselbe beim Start und beim Landen in drei verschiedenen Phasen betrieben werden kann.

— Während einer Phase 1 wird das diskusförmige Raumfluggerät mit Hilfe von Strahltriebwerken zum Abheben vom Boden gebracht, welche auf zwei koaxial gegenläufig rotierende Ringe wirken, die Schaufelkränze bilden, welche mit Hilfe eines Metallringes hydraulisch geöffnet und verschlossen werden können. In dieser ersten Phase des Raumflugs arbeitet der Raumflugkörper somit wie ein Hubschrauber, so daß besondere Start- und Landebahnen nicht erforderlich sind.

— In der folgenden Phase 2 wird das diskusförmige Raumfluggerät mit Hilfe eines herausklappbaren Flugraketentriebwerkes in horizontaler Richtung durch die Atmosphäre beschleunigt. Aufgrund des sich ergebenden Auftriebes können somit die während der Phase 1 verwendeten Strahlturbinen unter Verschluß des Metallringes abgeschaltet werden. Während der Luftdruck mit zunehmender Höhe exponentiell zur Basis $e$ abnimmt, wird der Auftrieb durch eine entsprechende Geschwindigkeitserhöhung aufrecht erhalten. Auf diese Weise kann das Raumfluggerät auf eine Geschwindigkeit von etwa 6000 bis 8000 km/h und eine Flughöhe von etwa 50 bis 80 km gebracht werden. Damit kann erreicht werden, daß relativ große Mengen des mitgeführten Raketentreibstoffes, welche bei einer herkömmlichen Rakete nach Abwurf der ersten Stufe bereits verbraucht sind, für die folgende Phase 3 noch zur Verfügung stehen. Herkömmliche Raketen verwenden als Treibstoff vorzugsweise flüssigen Wasserstoff, wegen seiner geringsten spezifischen Dichte. Da in Phase 1 und 2 die Lufthülle das Gewicht des diskusförmigen Raumfluggerätes trägt, können große Mengen eines spezifisch sehr schweren Treibstoffs auf die erforderliche Geschwindigkeit von 6000 bis 8000 km/h beschleunigt werden.

— Um den Weltraum zu erreichen, benötigt das Raumfluggerät während der folgenden Phase 3 ein einziges starres an der Unterseite vorgegebenes Hauptraketentriebwerk. Da von nun an wieder die logarithmische Raketengleichung zur Geltung kommt, wird im Rahmen der Erfindung ein schwerer Treibstoff in Form von Silanöl zum Einsatz gebracht, der zuerst mit flüssigem Sauerstoff und später mit flüssigem Fluor verbrannt wird. Silanöle sind dabei die Dieselöle des Siliziums, bei welchen die Siliziumwasserstoffe jeweils 5, 6, 7, 8 oder 9 Siliziumatome aufweisen. Diese Stoffe galten bis 1970 in der Chemie als nicht darstellbar, was dann von einem der Erfinder widerlegt werden konnte. Als Raketentreibstoffe erscheinen Silanöle insoweit interessant, weil mit steigender Anzahl der Siliziumatome bei den höheren Silanen der prozentuale Anteil des Wasserstoffs abnimmt. Nach der Impulsgleichung ist dabei nicht nur die Geschwindigkeit der Raketengase sondern ebenfalls deren Masse entscheidend. Das Molekulargewicht von Siliziumtetrafluorid ist fast sechs mal so groß wie das von Wasser, das bei der Verbrennung von Wasserstoff entsteht. Würde nämlich statt Silanöl flüssiger Wasserstoff verbrannt, müßte sehr viel mehr an Treibstoff mitgeführt werden, was wiederum das Volumen des Raumfluggerätes beeinflussen würde.

— Die schon erwähnte Feuerkraft von Feststoffraketen wird bekanntlich durch Zusätze von Aluminiumpulver oder pulverförmiger Metallhydride wesentlich gesteigert. Feststoffraketen haben den großen Nachteil, daß sie nach einmaliger Zündung nicht mehr abgestellt werden können. Dies bewirkt etwa für die Shuttle-Technik eine enorme Gefährdung der Insassen. Silizium steht im Periodensystem direkt rechts neben dem Aluminium. Der rechts neben dem Silizium stehende Phosphor bildet keine flüssigen höheren Phosphane. Da die Hydride von langkettigen Siliziumatomen pumpbar sind, wird der Vorteil einer Feststoffrakete und die Abschaltmöglichkeit einer Flüssigkeitsrakete durch das Element Silizium kombiniert.

Die Erfindung soll nunmehr an Hand eines Ausführungsbeispiels näher erläutert und beschrieben werden, wobei auf die beigefügte Zeichnung bezug genommen ist. Es zeigen:

Fig. 1 eine schematische seitliche Ansicht des erfindungsgemäßen wiederverwendbaren Raumfluggerätes;

Fig. 2 eine vergrößerte Detailansicht des Raumfluggerätes von Fig. 1 im Zustand des Verschlusses der vorgesehenen gegenläufigen Schaufelkränze; und

Fig. 3 eine vergrößerte schematische Detailansicht ähnlich Fig. 2 im Zustand der nach außen hin geöffneten gegenläufigen Schaufelkränze.

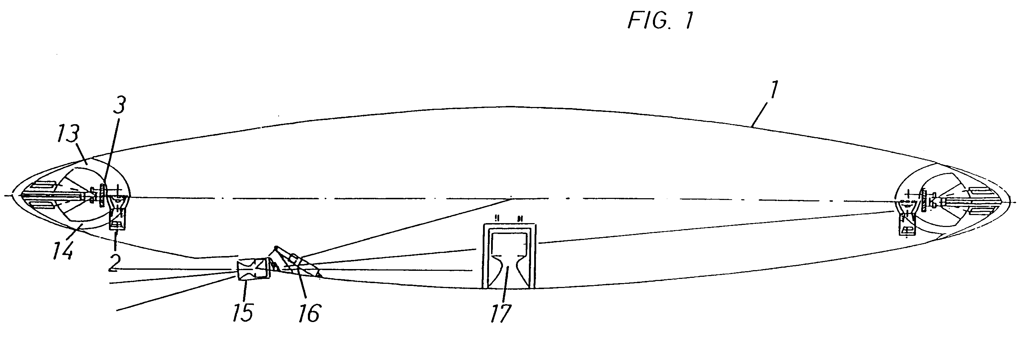

Das im Rahmen der vorliegenden Erfindung vorgesehene wiederverwendbare Raumfluggerät weist gemäß Fig. 1 einen diskusförmigen Außenmantel 1 auf, weicher derart konfiguriert ist, daß bei schrägem Flug durch ein gasförmiges Medium ein Auftrieb entsteht.

Im peripheren Bereich des Raumfluggerätes sind mehrere, vorzugsweise vier, jeweils um 90 Grad gegeneinander versetzt angeordnete Strahltriebwerke 2 vorgesehen, welche über entsprechende Getriebe zwei entlang des gesamten Umfangs des Raumfluggerätes geführte Ringe 4 und 5 gegenläufig antreiben, an denen winkelmäßig verstellbare Schaufeln 6 befestigt sind. Diese Schaufeln 6 bilden dabei in der Art eines Impellers zwei Schaufelkränze 7 und 8, mit welchen ein nach unten gerichteter Luftstrom erzeugt werden kann.

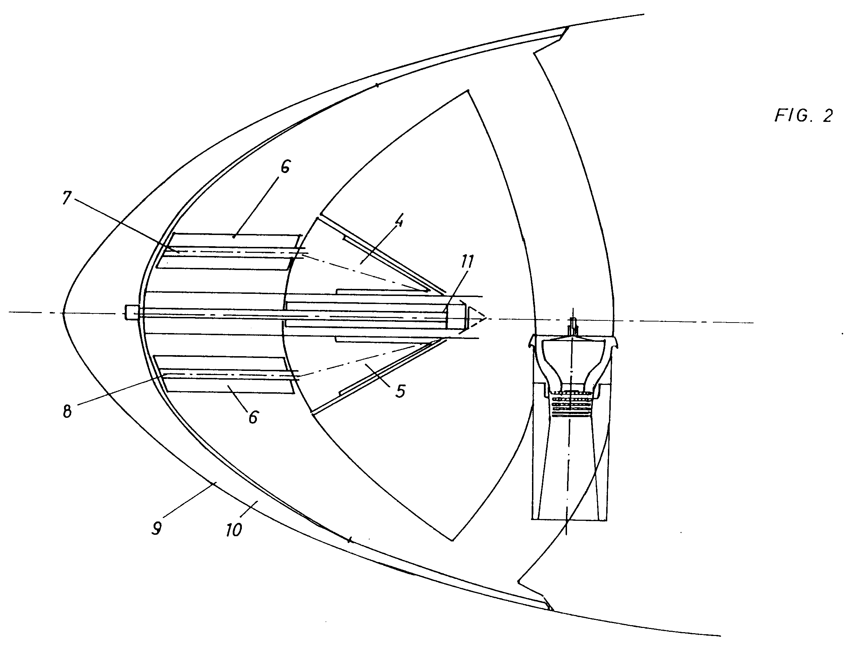

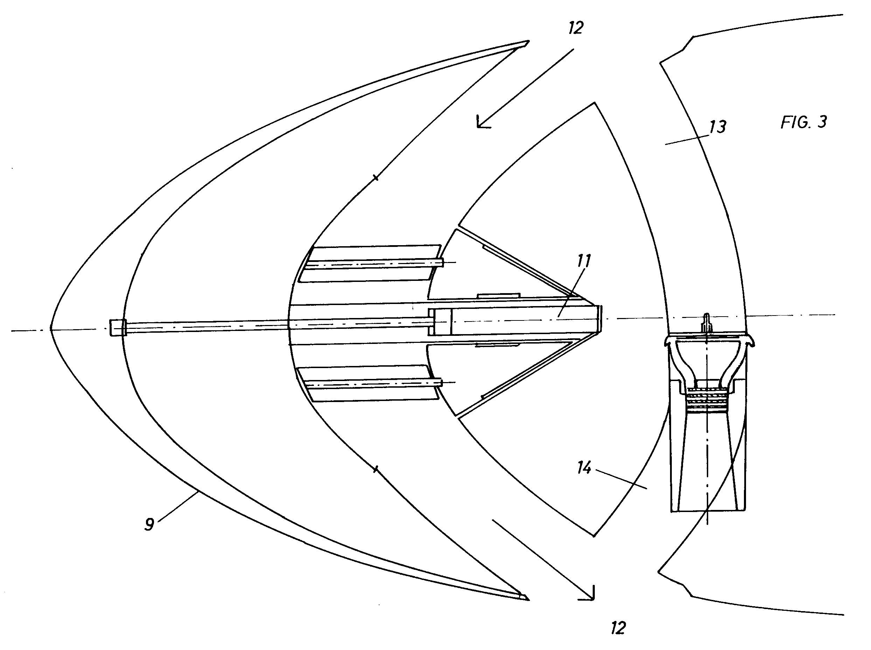

Gemäß Fig. 2 werden diese beiden Schaufelkränze 7 und 8 durch einen nahtlos in den Außenmantel 1 übergehenden Metallring 9 verschlossen, welcher aus einer Mehrzahl, vorzugsweise zwölf Ringsegmenten 10 besteht, die mit Hilfe von entsprechenden Hydraulikzylindern 11 in eine in Fig. 3 dargestellte ausgefahrene Position bewegbar sind. Auf diese Weise wird entlang des Umfangs des Raumfluggerätes ein im wesentlichen vertikal verlaufender Ringschlitz 12 gebildet, durch welchen die von den beiden Schaufelkränzen 7 und 8 erzeugten Luftströme von der Oberseite des Außenmantels 1 zur Unterseite geleitet werden. Die beim Ausfahren der Ringsegmente 10 sich ergebenden Schlitze zwischen den einzelnen Ringsegmenten 10 werden durch seitlich bewegbare Verschlußelemente geschlossen, so daß auch im ausgefahrenen Zustand der Ringsegmente 10 die gewünschte Ringstruktur des Metallringes 9 erhalten bleibt. Die im peripheren Bereich des Raumfluggerätes vorgesehenen Strahltriebwerke 2 sind im übrigen mit entsprechenden Einlaß- und Auslaßkanälen 13 und 14 versehen, welche gemäß Fig. 1 in den vorhandenen Ringschlitz 12 einmünden, wodurch die von den beiden Schaufelkränzen 7 und 8 geförderten Luftmengen in Richtung der Unterseite des Raumfluggerätes noch vergrößert werden.

Im Bereich der unteren Fläche des diskusförmigen Raumfluggerätes ist ein Raketentriebwerk 15 vorgesehen, welches nach Öffnung einer entsprechenden Klappe mit Hilfe eines Hydraulikzylinders 16 in eine schräg nach unten gerichtete Position geschwenkt werden kann. Dieses Raketentriebwerk 15 ist dabei mit einer steuerbaren Aufhängung versehen, um eine Steuerung des gesamten Raumfluggerätes vornehmen zu können.

Gemäß Fig. 1 weist das erfindungsgemäße Raumfluggerät schließlich noch in seinem unteren mittleren Bereich ein Hauptraketentriebwerk 17 auf, dessen Austrittsöffnung mit Hilfe einer innerhalb des Außenmantels 1 vorgesehenen Klappe verschlossen werden kann.

Die Funktionsweise des erfindungsgemäßen Raumfluggerätes ist wie folgt: Bei dem auf nicht dargestellten Fußstützen ruhenden Raumfluggerät werden zuerst die den Metallring 9 bildenden Ringsegmente 10 mit Hilfe der Hydraulikzylinder 11 in ihre äußere Position gefahren, worauf die entlang des Umfangs des Raumfluggerätes vorgesehenen Strahltriebwerke 2 in Betrieb genommen werden. Über die Getriebe 3 werden dadurch die beiden Ringe 4 und 5 mit den entsprechenden Schaufelkränzen 7 und 8 gegenläufig in Drehung versetzt, wodurch durch den gebildeten Ringschlitz 12 ein nach unten gerichteter Luftstrom erzeugt wird, der durch die von den Strahltriebwerken 2 entlang der Auslaßkanäle 14 abgegebenen heißen Gase noch vergrößert wird. Auf diese Weise wird das Raumfluggerät in der Art eines Hubschraubers vom Boden abgehoben. Im Gegensatz zu einer zylinderförmigen Mehrstufenrakete wird das diskusförmige Raumfluggerät nicht durch den Schub gebündelter Raketentriebwerke getragen, sondern durch die atmosphärischen Gase. Der Treibstoffverbrauch für die Turbinen ist vergleichsweise gering.

Während das Raumfluggerät über dem Boden schwebt, wird das außermittig im Bodenbereich des Außenmantels 1 vorgesehene Raketentriebwerk 15 mit Hilfe des Hydraulikzylinders 16 in die in Fig. 1 dargestellte Position geschwenkt und in Betrieb genommen. Mit Hilfe dieses Raketentriebwerkes 15 soll das Raumfluggerät seitlich beschleunigt werden. Noch vor Erreichen der Schallgeschwindigkeit können die Rotorblätter der Schaufelkränze 7 und 8 waagerecht gestellt werden, weil mit zunehmender Geschwindigkeit nunmehr die aerodynamische Form des Außenmantels 1 den erforderlichen Auftrieb ergibt. Bei einer Geschwindigkeit von etwa 1000 km/h und einer Flughöhe von etwa 5 km werden die Strahltriebwerke 2 abgestellt. Das Nachlaufen der Schaufelkränze 7 und 8 stabilisiert das Raumfluggerät. Die Ringsegmente 10 werden mit Hilfe der Hydraulikzylinder 11 eingefahren, so daß der Metallring 9 nahtlos in den Außenmantel 1 übergeht. Aus dem Raumfluggerät, welches bisher wie ein Raketenhubschrauber arbeitete, ist nun ein aerodynamisch ideales Raketenflugzeug geworden. Mit Hilfe des Raketentriebwerks 15 kann das Raumfluggerät nunmehr auf eine Geschwindigkeit von etwa 6000 km/h beschleunigt werden. Der mit zunehmender Flughöhe in etwa exponentiell abfallende Luftdruck wird dabei durch die zunehmend höhere Geschwindigkeit des Raumfluggerätes kompensiert, so daß auf diese Weise mit Hilfe des Schrägfluges eine Flughöhe von etwa 50 km erreicht werden kann.

Nachdem der vorhandene Luftdruck auf sehr niedrige Werte abgesunken ist, und demzufolge auch bei sehr hohen Geschwindigkeiten ein Auftrieb durch die äußere Konfiguration des Außenmantels 1 nicht mehr zustandekommt, wird das Raketentriebwerk 15 mit Hilfe des Hydraulikzylinders 16 in seine Ausgangslage zurückgeschwenkt und mit Hilfe einer nicht dargestellten Klappe die innerhalb des Außenmantels 1 vorhandene Öffnung verschlossen. Gleichzeitig wird das entlang der Mittelachse des Raumfluggerätes auf der Unterseite vorgesehene Haupttriebwerk 17 gezündet, so daß in dieser Antriebsphase das diskusförmige Raumfluggerät in der Art einer normalen Rakete bis in den Weltraum hinaus gehoben wird. Mit Hilfe dieses Haupttriebwerkes 17 kann die Geschwindigkeit des Raumfluggerätes von etwa 6000 km/h auf 30000 km/h erhöht werden, was für Raumfahrtmissionen mit niedrigen Umlaufbahnen ausreichend erscheint.

Um jedoch höhere, beispielsweise stationäre Umlaufbahnen erreichen zu können, ist im Rahmen der vorliegenden Erfindung vorgesehen, daß den beiden Raketentriebwerken 15 und 17 Silanöle als Raketentreibstoff zugeführt werden. In diesem Zusammenhang sei erwähnt, daß 1968 zum ersten Mal die von Alfred Stock entdeckten flüssigen Siliziumwasserstoffe Trisilan und n-Tetrasilan chloriert wurden (s. F. Fehér, P. Plichta, R. Guillery in "Inorganic Chemistry", Vol. 10, No. 3, März 1971), wodurch diese energiereichen Silane chemisch beherrschbar wurden. Bis zu diesem Zeitpunkt waren alle Versuche von A. Stock u. a. durch heftigste Explosionen gescheitert. Zwar war bis dahin schon vorgeschlagen worden, die leicht gewinnbaren Gase Mono- und Disilan als Raketentreibstoffe einzusetzen. Jedoch sind alle bis 1970 bekannten vier Silane

$$SiH_4, Si_2H_6, Si_3H_8, Si_4H_{10}$$

selbstentzündlich und so handhabungsunsicher, daß sich ihre Verwendung als Raketentreibstoff ausschließt. 1970 wurden vom Erfinder P. Plichta die höheren Silane, d. h. die Dieselöle des Siliziums, pyrolytisch aus niedrigen Silanen erstmalig hergestellt, und das Silanölgemisch wurde praparativ gaschromatographisch in die n- und iso- Silane des

$$Si_5H_{12}, Si_6H_{14}, Si_7H_{16}, Si_8H_{18}, Si_9H_{20}$$

zerlegt. Überraschend stellte sich dabei heraus, daß diese höheren Silane durch Hitze herstellbar sind (siehe DE-PS 2 139 155). Noch überraschender war jedoch der Umstand, daß die Silane mit größerer Kettenlänge ab n-Heptasilan nicht mehr selbstentzündlich sind. Auf diese Weise ist es großtechnisch möglich, daß aus den Rohstoffen Magnesium, Silizium und Schwefelsäure Tri- und Tetrasilan hergestellt werden, welche dann in der Folge in handlungssichere höhere Silanölgemische umgewandelt werden.

Auf Grund von Untersuchungen der Erfinder hat es sich gezeigt, daß die Verbrennung von Silanen größerer Kettenlänge mit flüssigem Sauerstoff, flüssigem Chlor oder Fluor Verbrennungstemperaturen liefert, welche weit höher als die eines Wasserstoff- Sauerstoff-Brenners liegen. Während das kohlenstoffhaltige Dieselöl mit einer Rußfahne abfackelt, verbrennt beispielsweise Heptasilanöl unter Abgabe eines Lichtblitzes. Darüberhinaus ist Heptasilanöl im Gegensatz zu Hydrazin und seinen Derivaten chemisch nicht aggressiv.

Die Verwendung der Silanöle als Raketentreibstoff hat neben dem Vorteil höherer Verbrennungstemperaturen auch den Vorteil einer relativ hohen Molekülmasse der Verbrennungsprodukte. Gemäß der Impulsgleichung

$$p = m \cdot v$$

ist nämlich für den Raketenschub nicht nur die Geschwindigkeit der Austrittsgase von Bedeutung, sondern ebenfalls die Molekülmasse der unter entsprechend hohen Temperaturen ausgestoßenen Verbrennungsprodukte. So betragen die Molekülmassen von $H_2O$ und $CO_2$ beispielsweise 18 und 44. Im Gegensatz dazu weist $SiO_2$ die Molekülmasse 60 auf, während die Molekülmasse von $SiF_4$ 104 beträgt. Durch Mitverbrennen von Chlor sowohl bei der Sauerstoff- wie auch Fluorverbrennung lassen sich diese Molekülmassen noch weiter erhöhen.

Im Vergleich zu den heute verwendeten Raketenmotoren ist ein Raketentriebwerk, welches Silanöl mit flüssigem Sauerstoff verbrennt, mindestens doppelt so stark. Die beiden erwähnten Bestandteile Silanöl und flüssiger Sauerstoff können dabei in Verbindung mit dem heransschwenkbaren Raketentriebwerk 15 des erfindungsgemäßen Raumfluggerätes zum Einsatz gelangen. Dabei entstehen nur die ungiftigen Reaktionsprodukte Siliziumdioxid und Wasser sowie Spuren von rotbraunem amorphen Siliziummonoxid, welche problemlos in die terrestrische Atmosphäre abgegeben werden können. Das mittig angeordnete Hauptraketentriebwerk 17 sollte anfänglich ebenfalls mit Silanöl und flüssigem Sauerstoff betrieben werden. Mit zunehmender Flughöhe kann jedoch zusätzlich flüssiges Chlor als Oxidationsmittel hinzugesetzt werden. Ab einer Flughöhe von mehr als 1000 km kann als Oxidationsmittel schließlich flüssiges Fluor zum Einsatz gelangen. Silanöl und Fluor stellen dabei die energiereichsten chemischen Antriebsstoffe dar, welche überhaupt denkbar erscheinen. Die dabei entstehenden Verbrennungsprodukte Siliziumtetrafluorid und Fluorwasserstoff sind allerdings sehr giftig, was jedoch bei sehr hohen Flughöhen nicht problematisch erscheint, weil die nach außen abgegebenen Verbrennungsprodukte im Weltraum von dem Sonnenwind davongetragen werden.

Mit den im Rahmen der Erfindung zu verwendenden energiereichen Treibstoffen lassen sich zwar nicht die physikalischen Gesetze der Raketengleichung aufheben. Durch eine geschickte Kombination von Triebwerks- und Raketentechnik, so wie sie im Rahmen der vorliegenden Erfindung zum Einsatz gelangt, läßt sich jedoch im wesentlichen einstufig eine stationäre terrestrische Umlaufbahn erreichen. In dieser Flughöhe könnte das erfindungsgemäße Raumfluggerät dann ein zweites Mal aufgetankt werden, wodurch eine Lande- und Startfähre entsteht, mit welcher mit einem Gasmantel versehene Planeten und Monde angesteuert und unter Einsatz der Konfiguration des Außenmantels 1 zur Abbremsung gebracht werden.

Um einen Wiederaufstieg durchführen zu können, sollte der Gasmantel des betreffenden stellaren Körpers entweder sauerstoffhaltig sein oder brennbare Gasanteile aufweisen. In diesem Fall ergibt sich die Möglichkeit, daß die Strahltriebwerke 2 des erfindungsgemäßen Raumfluggerätes derart ausgelegt werden, daß sie Wasserstoff, Methan, Cyanwasserstoff, Ammoniak oder andere Gase von außen her ansaugen, während gleichzeitig in dem Raumfluggerät mitgeführtes flüssiges Oxidationsmittel, wie Tetranitromethan, zur Einleitung gelangt, so daß in den betreffenden Strahltriebwerken 2 wunschgemäß ein exothermer Oxidationsprozeß stattfinden kann.

Um auf gasumhüllten Planeten oder Monden landen zu können, sollte der Außenmantel 1 des erfindungsgemäßen Raumfluggerätes auf seiner Unterseite mit Siliziumkeramik gepanzert sein. Außerdem sollte die Möglichkeit vorhanden sein, daß die auf der Unterseite vorgesehene Austrittsöffnung des Hauptraketentriebwerkes 17 voll verschließbar ist.

Beim Bau des erfindungsgemäßen Raumfluggerätes sollten weitgehend Berylliumlegierungen zum Einsatz gelangen, weil nur auf diese Weise das Startgewicht auf einem Minimum gehalten werden kann. Die Kosten derartiger Legierungen erscheinen dabei durchaus vertretbar, weil das erfindungsgemäße Raumfluggerät zur Gänze wiederverwendbar ist. Vorteilhaft ist ferner der Umstand, daß die beiden Raketentriebwerke 15 und 17 zu jedem Zeitpunkt abstellbar sind, was bei einer herkömmlichen Rakete den Absturz und die völlige Vernichtung bedeuten würde. Selbst bei Ausfall aller Antriebe kann du erfindungsgemäße Raumfluggerät durch Autorotation der beiden Schaufelkränze 7 und 8 weich auf seinen nicht dargestellten Fußstützen zur Notlandung gebracht werden.

**Patentansprüche**

1. Wiederverwendbares Raumfluggerät für bemannte und/oder unbemannte Weltraumreisen, welches einen Außenmantel (1) aufweist, der bei horizontalem Flug durch eine Gasatmosphäre einen Auftrieb erzeugt, dadurch gekennzeichnet, daß im Innern des diskusförmig ausgebildeten Außenmantels (1) die folgenden drei Antriebssysteme angeordnet sind:

   - eine im peripheren Bereich des Raumfluggerätes angeordnete Strahltriebwerksanordnung mit einer Mehrzahl von Stahltriebwerken (2), welche über entsprechende Getriebe (3) auf zwei koaxial gegenläufig rotierende Ringe (4,5) wirken, auf denen zur Ausbildung von Schaufelkränzen (7,8) auftriebserzeugende Schaufeln (6) angeordnet sind, wobei diese Schaufelkränze (7, 8) mit Hilfe eines den Randbereich des Außenmantels (1) bildenden Metallringes (9) öffen- und schließbar sind, welcher aus einer Mehrzahl von einzelnen Ringsegmenten (10) zum Öffnen und Schließen des Luftzu- und -ausganges der Schaufelkränze (7,8) besteht, die mittels ausfahrbarer Hydraulikzylinder (11) in radialer Richtung nach außen und innen bewegbar sind,

   - wenigstens ein aus dem Bodenbereich des diskusförmigen Außenmantels (1) herausklappbares, schräg zur Seite wirkendes Flugrakententriebwerk (15), mit welchem das Raumfluggerät in seiner Eigenschaft als Flugkörper bis an den Rand der terrestrischen Stratosphäre anhebbar ist, und

   - wenigstens ein mittig in bezug auf den diskusförmigen Außenmantel (1) angeordnetes Haupttriebwerk (17), mit welchem das Raumfluggerät durch den leeren Weltraum bewegbar ist, wobei das Haupttriebwerk (17) derart ausgebildet ist, daß es mit einem Raketentreibstoff in Form von Silanöl der chemischen Formel $Si_5H_{12}$ bis $Si_9H_{20}$ antreibbar ist.

2. Wiederverwendbares Raumfluggerät nach Anspruch 1, dadurch gekennzeichnet, daß das Flugraketentriebwerk (15) derart ausgebildet ist, daß es mit einem Raketentreibstoff in Form von Silanöl der chemischen Formel $Si_5H_{12}$ bis $Si_9H_{20}$ antreibbar ist.

3. Wiederverwendbares Raumfluggerät nach Anspruch 1 oder 2, dadurch gekennzeichnet, daß die Austrittsöffnungen der Triebwerke (15,17) durch innerhalb des Außenmantels (1) angeordnete Klappen verschließbar sind.

4. Wiederverwendbares Raumfluggerät nach einem der Ansprüche 1 bis 3, dadurch gekennzeichnet, daß dem Haupttriebwerk (17) flüssiger Sauerstoff, Chlor, Fluor und/oder Mischungen dieser Stoffe als Oxidationsmittel zuführbar sind.

5. Wiederverwendbares Raumfluggerät nach einem der Ansprüche 1 bis 4, dadurch gekennzeichnet, daß die Strahltriebwerke (2) der Strahltriebwerksanordnung derart ausgebildet sind, daß beim Eintauchen des Raumfluggerätes in eine wasserstoff-, methan- oder ammoniakhaltige Atmosphäre ein flüssiges Oxidationsmittel, wie Tetranitromethan, diesen Strahltriebwerken (2) zuführbar ist.

**Claims**

1. A reusable spacecraft for manned and/or unmanned space trips which has an outer casing (1) which generates buoyancy when horizontally flying through a gas atmosphere, characterized in that the following three drive systems are disposed in the interior of the disk-shaped outer casing (1):

   - a jet arrangement located in the peripheral range of the spacecraft and having a plurality of jets (2) which act on two coaxially oppositely rotating rings (4, 5) through corresponding transmissions (3) wherein buoyancy-generating blades (6) are arranged on these rings for the formation of blade rings (7, 8) and wherein these blade rings (7, 8) are openable and closable by means of a metal ring (9) forming the edge portion of the outer casing (1), said metal ring (9) consisting of a plurality of individual ring segments (10) for the opening and closing of the air inlet and air outlet of the blade rings (7, 8), said ring segments (10) being outwardly and inwardly movable in radial direction by means of extendable hydraulic cylinders (11),

- at least one rocket drive (15) slanted sideways and foldable out of the bottom area of the disk-shaped outer casing (1), the spacecraft being liftable as flying body up to the margin of the terrestrial stratosphere by said rocket drive, and

- at least one main thruster (17) centrally located with respect to the disk-shaped outer casing (1) and adapted to move the spacecraft through the vacuum space, wherein the main thruster (17) is designed in such a manner that it is adapted to be driven by a silane oil of the chemical formula $Si_5H_{12}$ to $Si_9H_{20}$ as rocket propellant.

2. The reusable spacecraft according to claim 1, characterized in that the rocket drive (15) is designed in such a manner that it is adapted to be driven with a silane oil of the chemical formula $Si_5H_{12}$ to $Si_9H_{20}$ as rocket propellant.

3. The reusable spacecraft according to claim 1 or 2, characterized in that the outlet openings of the drive means (15, 17) are adapted to be closed by flaps located within the outer casing (1).

4. The reusable spacecraft according to one of the claims 1 to 3, characterized in that liquid oxygen, chlorine, fluorine and/or mixtures of these substances can be fed to the main thruster (17).

5. The reusable spacecraft according to one of the claims 1 to 4, characterized in that the jets (2) of the jet arrangement are formed in such a manner that a liquid oxidant, as for instance tetranitromethane, can be fed to these jets (2) when the spacecraft immerses into a hydrogen, methane or ammonia-containing atmosphere.

**Revendications**

1. Appareil de vol spatial réutilisable pour voyages spatiaux habités et/ou non habités, qui comprend une enveloppe extérieure (1) qui produit une poussée ascensionnelle lors d'un vol horizontal dans une atmosphère gazeuse, caractérisé en ce que les trois systèmes moteurs suivants sont disposés à l'intérieur de l'enveloppe extérieure (1) réalisée en forme de disque :

- un agencement de moteurs à réaction disposés dans la zone périphérique de l'appareil de vol spatial et comportant plusieurs moteurs à réaction (2) qui agissent, au moyen d'engrenages (3) appropriés, sur deux anneaux (4, 5), tournant d'une manière coaxiale dans des sens opposés, sur lesquels sont disposées des aubes (6) produisant une poussée ascensionnelle et servant à former des couronnes d'aubes (7, 8), ces couronnes d'aubes (7, 8) pouvant être ouvertes et fermées au moyen d'un anneau métallique (9) qui constitue la zone périphérique de l'enveloppe extérieure (1) et consiste en plusieurs segments annulaires (10) individuels qui servent à ouvrir et fermer l'entrée et la sortie d'air des couronnes d'aubes (7, 8) et qui sont déplaçables suivant la direction radiale, vers l'extérieur et vers l'intérieur, au moyen de vérins hydrauliques (11) déployables,

- au moins un moteur-fusée de vol (15) qui est rabattable hors de la zone de fond de l'enveloppe extérieure (1) en forme de disque et agit d'une manière inclinée vers le côté et au moyen duquel l'appareil de vol spatial peut être élevé, en qualité d'engin volant, jusqu'à la limite de la stratosphère terrestre et

- au moins un moteur principal qui est disposé en position centrale par rapport à l'enveloppe extérieure (1) en forme de disque et au moyen duquel l'appareil de vol spatial peut être déplacé dans le vide spatial, le moteur principal (17) étant agencé de façon à pouvoir être propulsé par un carburant de fusée se présentant sous forme de silanol de formule chimique $Si_5H_{12}$ à $Si_9H_{20}$.

2. Appareil de vol spatial réutilisable suivant la revendication 1, caractérisé en ce que le moteur-fusée de vol (15) est agencé de façon à pouvoir être propulsé par un carburant de fusée se présentant sous forme de silanol de formule chimique $Si_5H_{12}$ à $Si_9H_{20}$.

3. Appareil de vol spatial réutilisable suivant la revendication 1 ou 2, caractérisé en ce que les ouvertures de sortie des moteurs (15, 17) peuvent être fermées au moyen de volets disposés à l'intérieur de l'enveloppe extérieure (1).

4. Appareil de vol spatial réutilisable suivant l'une des revendications 1 à 3, caractérisé en ce que de l'oxygène, chlore, fluor liquide et/ou des mélanges de ces substances, sous forme liquide, peuvent être envoyés au moteur principal (17) en tant qu'agent oxydant.

5. Appareil de vol spatial réutilisable suivant l'une des revendications 1 à 4, caractérisé en ce que les moteurs à réaction (2) de l'agencement de moteurs à réaction sont agencés de façon telle qu'un agent oxydant liquide, tel que du tétranitrométhane, puisse être envoyé à ces moteurs à réaction (2) lors de la plongée de l'appareil de vol spatial dans une atmosphère contenant de l'hydrogène, du méthane ou de l'ammoniac.

*FIG. 1*

FIG. 2

FIG. 3